# NEUE EUROPÄISCHE PATENTSCHRIFT

(11) **EP 1 542 052 B2**
(45) Veröffentlichungstag und Bekanntmachung des Hinweises auf die Entscheidung über den Einspruch: **12.11.2014**
(45) Hinweis auf die Patenterteilung: 07.03.2007
(21) Anmeldenummer: 04028632.0
(22) Anmeldetag: 03.12.2004
(51) Int. Cl.: G02B 23/18, G01C 3/00

(54) **Binokulares Fernglas mit integriertem Laser-Entfernungsmesser**
Binocular with integrated laser range finder
Binoculaire avec télémètre laser intégré

(30) Priorität: 12.12.2003 DE 10358669; 10.11.2004 DE 4054182
(43) Veröffentlichungstag der Anmeldung: 15.06.2005
(73) Patentinhaber: Perger, Andreas, Dr., 1120 Wien (AT); Leica Camera Aktiengesellschaft, 35606 Solms bei Wetzlar (DE)
(72) Erfinder: Perger, Andreas, 1120 Wien (AT); Kettler, Gernot, 90469 Nürnberg (DE)
(74) Vertreter: Stamer, Jan

(56) Entgegenhaltungen:
- EP-A- 1 298 480
- DE-A1- 3 704 848
- PATENT ABSTRACTS OF JAPAN Bd. 1998, Nr. 10, 31. August 1998 (1998-08-31) -& JP 10 142477 A (MINOLTA CO LTD), 29. Mai 1998 (1998-05-29)

## Beschreibung

Die Erfindung betrifft ein binokulares Fernglas mit einem integrierten Laser-Entfernungsmesser.

Bei einem aus DE 37 04 848 C2 bekannten Fernglas dieser Art sind die beiden aus Objektiv, Bildumkehrsystem und Okular bestehenden Beobachtungssysteme in einem gemeinsamen Gehäuse angeordnet. Zur Augenweiteneinstellung können lediglich die Okulare gegeneinander verstellt werden. Dabei verändert sich die Lage der optischen Achse der Okulare gegenüber der optischen Achse des Objektiv- und Umkehrsystems. Die Fokussierung erfolgt im allgemeinen über eine Einzelokularverstellung.

In dem gemeinsamen Gehäuse sind auch die Funktionselemente des Laser-Entfernungsmessers in fester Anordnung zueinander und zu den Strahlengängen des Beobachtungsteiles angeordnet. Dabei kann das gesamte Volumen des Gehäuses für die Anordnung der Teile genutzt werden. Das Laser-Meßstrahlenbündel wird entweder über einen separaten optischen Strahlengang ausgesendet oder über eines der Beobachtungsobjektive. Die am Objekt reflektierte Meßstrahlung wird üblicherweise über eines der Beobachtungsobjektive aufgenommen.

Das Fernglasgehäuse ist relativ unhandlich und schwer. Die Okularfokussierung ist umständlich, so daß diese Geräte üblicherweise für die Beobachtung im Fernbereich benutzt werden, bei der eine Fokussierung aufgrund der Akkomodationsfähigkeit des Auges im allgemeinen nicht notwendig ist.

Binokulare Beobachtungsferngläser enthalten demgegenüber eine Knickbrücke, die es erlaubt, den Abstand der optischen Achsen beider Beobachtungssysteme auf den Augenabstand einzustellen. Das Gewicht solcher Ferngläser läßt sich im allgemeinen deutlich geringer darstellen als bei einem starren Gehäuse.

Die Fokussierung erfolgt über einen zentralen Drehknopf, der griffgünstig auf der Knickbrücke liegt und auf Fokussierglieder im Objektivteil einwirkt. Auf diese Weise kann bequem von der Fernbeobachtung bis zur näheren Beobachtung eine Fokussierung durchgeführt werden.

Der Erfindung liegt daher die Aufgabe zugrunde, die Vorteile eines binokularen Beobachtungsfernglases mit der zusätzlichen Funktion der Entfernungsmessung und -Anzeige im beobachteten Bildfeld zu kombinieren.

Diese Aufgabe wird bei einem binokularen Fernglas gemäß Anspruch 1 gelöst.

Der wesentliche Erfindungsgedanke besteht darin, die Funktionselemente für die Entfernungsmessung und Anzeige der Meßwerte in fester Zuordnung zu dem optischen Strahlengang und den optischen Elementen des einen Beobachtungsrohres anzuordnen.

Ein weiteres wesentliches Konstruktionselement besteht darin, nur das okularseitige Gelenkelement mit einer Gelenkachse zu versehen, so daß nur diesem die Funktion der Gelenkbrücke zukommt. Nur dieses Gelenkelement sorgt für die parallele Ausrichtung der beiden Fernrohrachsen und die Aufrechterhaltung dieser Ausrichtung bei der Augenweiteneinstellung. Kräftig gestaltete Gelenkelemente und eine gute Passung mit der Gelenkachse sind die konstruktiven Elemente zum Erreichen dieser Funktion.

Das objektivseitige Gelenkteil gibt dem System darüber hinaus die notwendige Verwindungssteifigkeit. Die dazu aufeinander liegenden und einander teilweise umgreifenden Laschen mit ihrer zentralen Bohrung und dem eingefügten zylindrischen Hülsenteil sind die konstruktiven Gestaltungselemente zum Erreichen dieser Funktion.

Das zylindrische Hülsenteil nimmt den Laser-Sender auf, dessen optische Achse damit in räumlicher Nähe zur optischen Achse des die reflektierten Meßstrahlen aufnehmenden Objektivs liegt. Das Hülsenteil wird mit der Lasche des Gehäuseteiles fest verschraubt, das den Entfernungsmesser enthält. Dadurch ergibt sich die stabile Lage von Laser-Sender zu Empfänger und Display, sowie dem Beobachtungsstrahlengang in dieser Fernglashälfte.

Das dem ersten Gehäuseteil zugeordnete Okular kann vom Benutzer entsprechend seiner Sehkraft auf die eingespiegelte Meßwertanzeige scharf gestellt werden. Anschließend wird über den Fokussiertrieb im selben Beobachtungskanal ein scharfes Objektbild eingestellt. Danach kann das andere Okular zum Ausgleich der Sehkraft des anderen Auges auf dieses Objektbild ebenfalls scharf eingestellt werden. Danach bleibt die Scharfeinstellung der Meßwertanzeige und der Objektbeobachtung beim Betätigen des zentralen Fokussierknopfes für beide Augen erhalten.

Ein Ausführungsbeispiel des erfindungsgemäßen binokularen Fernglases ist in der Zeichnung dargestellt. Die in den Merkmalen der Patentansprüche angegebenen Ausgestaltungen kann der Fachmann der Zeichnung entnehmen.
Fig.1 zeigt eine Schnittdarstellung in Aufsicht von der einen Seite her.
Fig.2 zeigt eine Schnittdarstellung in Aufsicht auf die darunter liegende Seite.

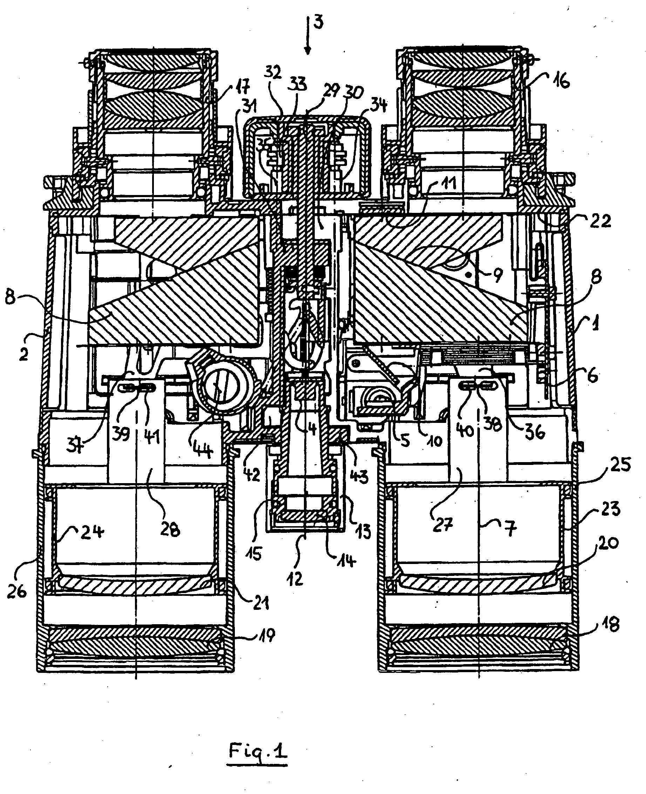

Die Schnittdarstellung nach Fig.1 zeigt die Ansicht auf die Unterseite des Fernglases. Ein erstes Gehäuseteil 1 und ein zweites Gehäuseteil 2 sind über eine Gelenkbrücke 3 zur Augenweiteneinstellung miteinander verbunden.

Mit dem ersten Gehäuseteil 1 sind ein Sender 4, ein Empfänger 5 und ein Anzeigeelement 6 als opto-elektronische Elemente eines Laser-Entfernungsmessers fest verbunden. Die optische Achse des Empfängerstrahlenganges für die Entfernungsmessung stimmt mit der optischen Beobachtungsachse 7 im ersten Gehäuseteil 1 überein.

Die Auskopplung des Empfangsstrahlenganges für die Entfernungsmessung erfolgt am Umlenk- und Bildaufrichteprisma 8 entsprechend einem der in DE 199 33 172 C I beschriebenen Strahlengänge. Das an der strahlenteilenden Kittfläche 9 des Prismensystems 8 reflektierte infrarote Meßstrahlenbündel wird durch einen Teilerspiegel 10 hindurch nach weiterer Umlenkung auf den Empfänger 5 geleitet. Das Strahlenbündel des am Anzeigeelement 6 sichtbar dargestellten Meßergebnisses wird am Teilerspiegel 10 reflektiert und trifft durch die Kittfläche 9 hindurch auf einen Hohlspiegel 11 und wird nach Reflektion an der Kittfläche 9 in den optischen Beobachtungsstrahlengang eingeleitet.

Neben dem Empfänger 5 kann ein weiterer, nicht dargestellter Empfänger für sichtbare Strahlung angeordnet sein, der über ein parallel zur Beobachtungsachse 7 verlaufendes Strahlenbündel die Helligkeit im Objektraum mißt. Das Meßsignal kann zur Steuerung der Helligkeit der Meßwertanzeige auf dem Anzeigeelement 6 verwendet werden. Die Helligkeit der Meßwertanzeige kann somit an die Helligkeit im beobachteten Bildfeld angepaßt werden.

Die Zeilenausrichtung des Anzeigeelementes 6 ist so gewählt, daß bei einer Einstellung der beiden Gehäuseteile 1, 2 auf einen durchschnittlichen Augenabstand von z.B. 65 mm alle Anzeigezeilen parallel zum Horizont liegen.

Als Sender 4 für die Entfernungsmessung ist ein Dioden-Laser vorgesehen, dessen Sendeachse 12 parallel zur Beobachtungsachse 7 ausgerichtet ist. Der Dioden-Laser ist in einem zylindrischen Hülsenteil 13 angeordnet, das lichtaustrittsseitig eine Kollimationslinse 14 enthält. Die Kollimationslinse 14 ist in einer Doppelexzenterfassung 15 zur Ausrichtung der Sendeachse 12 gehalten und kann durch Einfügen von nicht dargestellten Unterlegscheiben im Abstand zur Emissionsfläche des Dioden-Lasers eingestellt werden, damit ein optimal kollimiertes Sendestrahlenbündel auf das angemessene Objekt gerichtet wird. Das Hülsenteil 13 ist mit dem ersten Gehäuseteil 1 fest verbunden.

Jedes der Gehäuseteile 1, 2 enthält ein Okular 16, 17, ein Objektiv 18, 19 und ein axial verschiebbares Fokussierglied 20, 21. Zur Bildaufrichtung sind in beiden Gehäuseteilen 1, 2 gleiche Prismensysteme 8 vorgesehen. Das Prismensystem 8 und die ihm im ersten Gehäuseteil 1 zugeordneten opto-elektronischen Bauelemente zur Entfernungsmessung sind auf einer gemeinsamen Montageplattform 22 angeordnet, an der sie vor dem Einsetzen in das Gehäuseteil 1 optisch zueinander ausgerichtet werden können.

Die Fokussierglieder 20, 21 sind jeweils in Fassungshülsen 23, 24 gehalten, die in Objektivtuben 25, 26 axial verschieblich und rotatorisch gleitend gelagert sind. An den Fassungshülsen 23, 24 sind Zungen 27,28 angeformt, die mit noch zu beschreibenden Übertragungsmitteln für die Fokussierung verdrehungssicher im Eingriff stehen. Zur Montage der Fokussierglieder 20, 21 und der Objektive 18, 19 an den Gehäuseteilen 1, 2 werden die Zungen 27, 28 in die genannten Übertragungsmittel eingehängt. Danach werden die Objektivtuben 25, 26 über die Fassungshülsen 23, 24 geschoben und auf die Gehäuseteile 1, 2 geschraubt.

Die beiden Gehäuseteile 1, 2 sind über eine Gelenkbrücke 3 zur Augenweiteneinstellung miteinander verbunden. Die Gelenkbrücke 3 enthält okularseitig eine Gelenkachse 29, die durch eine am ersten Gehäuseteil 1 befestigte Gelenköse 30 und eine am zweiten Gehäuseteil 2 befestigte Gelenköse 31 mit enger Spielpassung hindurch geht. Die beiden Gelenkösen 30, 31 sind auf der Gelenkachse 29 in ihrer Lage in axialer Richtung gegeneinander fixiert. Auf der Gelenkachse 29 ist zwischen den Okularen 16, 17 ein Drehknopf 32 zur axialen Verstellung der Fokussierglieder 20, 21 drehbar gelagert. Der Drehknopf 32 enthält dazu eine in axialer Richtung verstellbare, mit einem umlaufenden Steg versehene Scheibe 33, die in die mit einer umlaufenden Nut versehenen Köpfe zweier axial verschiebbar gelagerten Stangen 34, 35 eingreift. Zum spielfreien Eingriff der Köpfe mit dem Steg ist die eine Stange 34 unter Federdruck in Richtung des Okulars und die andere Stange 35 unter Federdruck in Richtung des Objektivs gelagert.

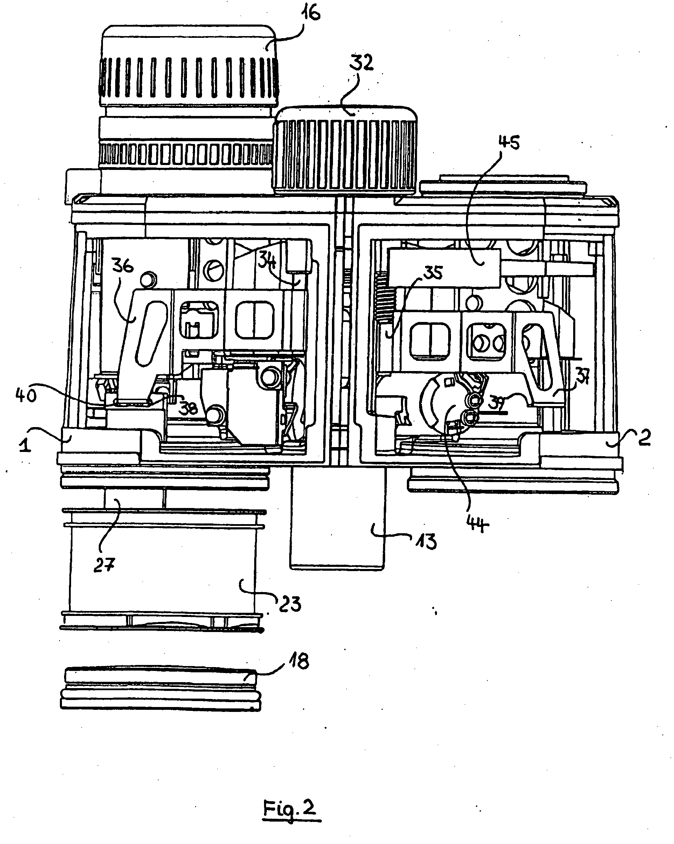

Wie aus Fig.2 ersichtlich, sind die Stangen 34,35 mit sich radial erstreckenden Übertragungsarmen 36,37 verbunden. Die Übertragungsarme 36, 37 sind als gestanzte Blechzungen ausgebildet, die in axialer Richtung eine große Steifigkeit besitzen, in radialer Richtung aber aufgrund axial verlaufender Biegestellen nahe der Gehäusewandung um die in die Gehäuseteile 1, 2 eingefügten Bauelemente herumgeführt werden können. An ihren in Richtung der Objektive 18, 19 weisenden Enden sind die Übertragungsarme 36, 37 mit Abkantungen 38, 39 versehen, die spielfrei in Schlitze 40, 41 in den Zungen 27, 28 eingreifen.

Objektivseitig sind die beiden Gehäuseteile 1, 2 mit Laschen 42, 43 versehen, die relativ große Bohrungen zur Aufnahme des zylindrischen Hülsenteiles 13 aufweisen. Die an dem zweiten Gehäuseteil 2 angeformte Lasche 43 ist so ausgebildet, daß sie die Lasche 42 in axialer Richtung teilweise umgreift. Die zusätzlich zentrierende Wirkung des in die Bohrungen eingesetzten und mit dem ersten Gehäuseteil 1 fest verbundenen zylindrischen Hülsenteils 13 erzeugt eine große Verwindungssteifigkeit für die Gelenkbrücke 3.

Die Okulare 16, 17 enthalten innen liegende, verschiebbare Linsenglieder. Zur individuellen Einstellung der Abbildungsschärfe auf die Augen des Benutzers wird zunächst durch Verstellen am Okular 16 die Scharfabbildung der Meßwertanzeige 6 eingestellt. Danach wird durch Betätigen des Drehknopfes 32 in demselben Gehäuseteil 1 die Abbildung eines entfernten Objektes scharf eingestellt. Durch Verstellen am Okular 17 des zweiten Gehäuseteiles 2 wird nun für das andere Auge ebenfalls eine Scharfabbildung desselben Objektes erzeugt (Dioptrieausgleich). Danach bleiben die Scharfabbildung der Meßwertanzeige 6 und des Objektes für beide Augen bei einer Änderung der Fokussierung auf andere Objekte erhalten.

Während in dem ersten Gehäuseteil 1 die opto-elektronischen Bauteile und die elektronischen Schaltungsmittel zur Entfernungsmessung und Meßwertanzeige untergebracht sind, enthält das zweite Gehäuseteil 2 ein von außen zugängliches Batteriefach 44. Zusätzlich können aber noch weitere an sich bekannte elektronische Meßvorrichtungen, wie z.B. ein elektronischer Richtungsmesser, Neigungsmesser, Höhenmesser, Temperaturmesser, Bildaufnahme-Chip, GPS-Empfänger oder eine kabelgebundene oder kabellose Schnittstelle zum Datenaustausch zwischen Fernglas und Zusatzgeräten dort untergebracht sein. Die genannten Meßvorrichtungen gibt es in miniaturisierten Ausführungsformen. Das Prismensystem 8, das im ersten Gehäuseteil 1 über getrennte Strahlendurchtrittsbereiche zur Auskopplung des Meßstrahlenganges und Einkopplung einer Meßwertanzeige dient, kann im zweiten Gehäuseteil 2 dazu genutzt werden, um über diese Flächen einen Teil der Beobachtungsstrahlen auf einen Bildaufnahme-Chip zu leiten.

Zusätzlich zum Batteriefach 44 ist ein von außen betätigbarer Taster 45 zur Auswahl, Auslösung oder Anzeige der unterschiedlichen Meßfunktionen am zweiten Gehäuseteil 2 angeordnet. Er liegt vorzugsweise in griffgünstiger Nähe zum Okular 17 auf der dem Batteriefach 44 gegenüber liegenden oberen Seite des Gehäuseteiles 2.

Bei der Vielzahl der möglichen elektronischen Meßvorrichtungen sollte sichergestellt sein, daß beide Gehäuseteile 1 , 2 auf demselben elektrischen Potential liegen. Dazu ist es vorteilhaft, den Minuspol der Batterie nicht nur mit dem Gehäuseteil 2, sondern über eine Kabelverbindung durch die Gelenkbrücke 3 hindurch auch körperlich mit dem Gehäuseteil 1 zu verbinden.

Zur Vermeidung einer elektronischen Abstrahlung ist es außerdem vorteilhaft, beide Gehäuseteile 1, 2 unter der außen liegenden Gehäusearmierung mit einer Abschirmfolie zu versehen.

### Bezugszeichenliste

- 1: erstes Gehäuseteil
- 2: zweites Gehäuseteil
- 3: Gelenkbrücke
- 4: Sender
- 5: Empfänger
- 6: Anzeigeelement zur Meßwertanzeige
- 7: optische Beobachtungsachse
- 8: Prismensystem zur Bildaufrichtung
- 9: strahlenteilende Kittfläche
- 10: Teilerspiegel
- 11: Hohlspiegel
- 12: Sendeachse
- 13: zylindrisches Hülsenteil
- 14: Kollimationslinse
- 15: Doppelexzenterfassung
- 16,17: Okulare
- 18,19: Objektive
- 20,21: Fokussierglieder
- 22: Montageplattform
- 23,24: Fassungshülsen
- 25,26: Objektivtuben
- 27,28: Zungen
- 29: Gelenkachse
- 30,31: Gelenkösen
- 32: Drehknopf
- 33: Scheibe mit Steg
- 34,35: Stangen
- 36,37: Übertragungsarme / Blechzungen
- 38,39: Abkantungen
- 40,41: Schlitze
- 42,43: Laschen
- 44: Batteriefach
- 45: Taster

## Patentansprüche

1. Binokulares Fernglas mit integriertem Laser-Entfernungsmesser, bei dem zwei getrennte Gehäuseteile (1, 2) mit jeweils einem Okular (16, 17) und jeweils einem Objektiv (18, 19) vorgesehen sind, sowie eine Gelenkbrücke (3) die die Gehäuseteile zur Augenweiteneinstellung miteinander verbindet wobei Sender (4) und Empfänger (5) als Komponenten des Laser-Entfernungsmessers sowie ein opto-elektronisches Anzeigeelement (6) (Display) in fester Anordnung zur optischen Beobachtungs-Achse (7) des ersten Gehäuseteiles (1) angeordnet sind, wobei im ersten Gehäuseteil eine dieser Komponenten des Laser-Entfernungsmessers und in der Gelenkbrücke eine dieser Komponenten des Laser-Entfernungsmessers angeordnet ist und die Gelenkbrücke (3) aus einem okularseitigen und einem objektivseitigen Gelenkelement besteht, wobei nur das okularseitige Gelenkteil eine Gelenkachse (29) enthält und das objektivseitige Gelenkelement aus zwei in axialer Richtung übereinander liegenden und den beiden Gehäuseteilen zugeordneten Laschen (42, 43) besteht, die eine zentrale Bohrung aufweisen, in die ein zylindrisches Hülsenteil (13) zur Aufnahme einer opto-elektronischen Vorrichtung eingesetzt ist wobei das zylindrische Hülsenteil (13) einen Laser und eine Kollimationsoptik (14) zur Projektion eines Laser-Meßstrahlenbündels auf ein entferntes Objekt enthält.

2. Binokulares Fernglas nach Anspruch 1, **dadurch gekennzeichnet, daß** die Kollimationsoptik (14) in einer Doppelexzenterfassung (15) in der Ebene senkrecht zur Meßstrahlenrichtung (12) justierbar gehalten ist.

3. Binokulares Fernglas nach Anspruch 1, **dadurch gekennzeichnet, daß** innerhalb des zweiten Gehäuseteiles (2) ein von außen zugängliches Batteriefach (44) angeordnet ist.

4. Binokulares Fernglas nach Anspruch 1, **dadurch gekennzeichnet, daß** innerhalb des zweiten Gehäuseteiles (2) zusätzliche elektronische Meßvorrichtungen, wie z.B. elektronischer Richtungsmesser, Neigungsmesser, Höhenmesser, Temperaturmesser, Bildaufnahme-Chip, GPS-Empfänger, kabelgebundene oder kabellose Schnittstelle zum Datenaustausch zwischen Fernglas und Zusatzgeräten, angeordnet sind.

5. Binokulares Fernglas nach Anspruch 3, **dadurch gekennzeichnet, daß** an dem zweiten Gehäuseteil (2) ein von außen betätigbarer Taster (45) zur Auswahl, Auslösung oder Anzeige unterschiedlicher Meßfunktionen angeordnet ist.

6. Binokulares Fernglas nach Anspruch 1, **dadurch gekennzeichnet, daß** dem Okular (16) an dem ersten Gehäuseteil (1) ein axial verschiebbares Linsenglied zur individuellen Scharfstellung auf die Meßwertanzeige (6) und dem Okular (17) an dem zweiten Gehäuseteil (2) ein axial verschiebbares Linsenglied zum individuellen Dioptrieausgleich zugeordnet sind.

7. Binokulares Fernglas nach Anspruch 1, **dadurch gekennzeichnet, daß** ein auf der Gelenkachse (29) gelagerter Drehknopf (32) zur zentralen Verstellung eines den Objektiven (18, 19) zugeordneten Fokussiergliedes (20, 21) vorgesehen ist.

8. Binokulares Fernglas nach Anspruch 7, **dadurch gekennzeichnet, daß** das Fokussierglied (20, 21) innerhalb eines auf die beiden Gehäuseteile (1, 2) aufschraubbaren Objektivtubus (25, 26) verschiebbar gelagert ist.

9. Binokulares Fernglas nach Anspruch 7, **dadurch gekennzeichnet, daß** an jedem der Fokussierglieder (20, 21) eine parallel zur optischen Achse (7) des Objektivs (18, 19) ausgerichtete Zunge (27, 28) befestigt ist, die mit einer Blechzunge (36, 37) innerhalb des ersten und zweiten Gehäuseteiles (1, 2) in Eingriff bringbar ist, die mit den vom Drehknopf (32) angetriebenen Verstellmitteln (34, 35) zur Fokussierung verbunden ist.

## Claims

1. Binoculars having an integrated laser rangefinder, in which two separate housing parts (1, 2) with in each case one eyepiece (16, 17) and in each case one objective (18, 19) are provided and there is a jointed bridge (3) which connects the housing parts to each other for eye width adjustment, wherein the transmitter (4) and receiver (5) as components of the laser rangefinder and also an optoelectronic display element (6) (display) are arranged in a fixed arrangement with respect to the optical observation axis (7) of the first housing part (1), and wherein one of these components of the laser rangefinder is arranged in the first housing part and one of these components of the laser rangefinder is arranged in the jointed bridge, and the jointed bridge (3) comprises a joint element on the eyepiece side and a joint element on the objective side, only the joint part on the eyepiece side containing a joint axis (29), and the joint element on the objective side comprises two lugs (42, 43) which are located one above the other in the axial direction and assigned to the two housing parts and have a central hole, into which a cylindrical sleeve part (13) for accommodating an optoelectronic device is inserted, wherein the cylindrical sleeve part (13) contains a laser and collimation optics (14) for projecting a laser measuring beam onto a remote object.

2. Binoculars according to Claim 1, **characterized in that** the collimation optics (14) are held in a double eccentric mount (15) such that they can be adjusted in the plane perpendicular to the measuring beam direction (12).

3. Binoculars according to Claim 1, **characterized in that** a battery compartment (44) that is accessible from the outside is arranged within the second housing part (2).

4. Binoculars according to Claim 1, **characterized in that** additional electronic measuring devices, such as an electronic direction meter, inclinometer, altimeter, thermometer, image recording chip, GPS receiver, cable-bound or cable-less interface for data interchange between the binoculars and additional devices, are arranged within the second housing part (2).

5. Binoculars according to Claim 3, **characterized in that** a pushbutton (45) that can be operated from the outside is arranged on the second housing part (2) for the purpose of selecting, triggering or displaying different measurement functions.

6. Binoculars according to Claim 1, **characterized in that** the eyepiece (16) on the first housing part (1) is assigned an axially displaceable lens element for individual focusing to the measured value display (6), and the eyepiece (17) on the second housing part (2) is assigned an axially displaceable lens element for individual diopter compensation.

7. Binoculars according to Claim 1, **characterized in that** a rotary knob (32) mounted on the joint axis (29) is provided for the central adjustment of a focusing element (20, 21) assigned to the objectives (18, 19).

8. Binoculars according to Claim 7, **characterized in that** the focusing element (20, 21) is displaceably mounted within an objective tube (25, 26) that can be screwed onto the two housing parts (1, 2).

9. Binoculars according to Claim 7, **characterized in that** a tongue (27, 28) aligned parallel to the optical axis (7) of the objective (18, 19) is fixed to each of the focusing elements (20, 21) and can be brought into engagement within the first and second housing parts (1, 2) with a sheet-metal tongue (36, 37) which is connected to the adjusting means (34, 35) driven by the rotary knob (32) for the purpose of focusing.

## Revendications

1. Jumelles binoculaires avec télémètre laser intégré, dans lesquelles deux parties de carter séparées (1, 2) sont prévues, chacune ayant un oculaire (16, 17) et un objectif (18, 19), ainsi qu'une liaison articulée (3) qui relie entre elles les parties de carter pour le réglage à la distance des yeux, l'émetteur (4) et le récepteur (5), composants du télémètre laser, ainsi qu'un élément d'affichage optoélectronique (6) (Display) étant disposés de manière fixe par rapport à l'axe optique d'observation (7) de la première partie de carter (1), un de ces composants du télémètre laser étant disposé dans la première partie de carter et un de ces composants du télémètre laser étant disposé dans la liaison articulée et la liaison articulée (3) étant constituée d'un élément articulé du côté de l'oculaire et d'un élément articulé du côté de l'objectif, seule la partie articulée du côté de l'oculaire contenant un axe d'articulation (29) et l'élément articulé du côté de l'objectif étant constitué de deux pattes (42, 43) superposées dans la direction axiale et affectées aux deux parties de carter, et ces pattes présentant un perçage central dans lequel une partie cylindrique de carter (13) est insérée pour recevoir un dispositif optoélectronique, la partie cylindrique de carter (13) contenant un laser et une optique de collimation (14) pour projeter un faisceau de rayons laser de mesure sur un objet éloigné.

2. Jumelles binoculaires selon la revendication 1, **caractérisées en ce que** l'optique de collimation (14) est maintenue de manière ajustable par une monture à double excentrique (15) dans le plan perpendiculaire à la direction des rayons de mesure (12).

3. Jumelles binoculaires selon la revendication 1, **caractérisées en ce qu'**un logement de batteries (44) accessible de l'extérieur est disposé à l'intérieur de la deuxième partie de carter (2).

4. Jumelles binoculaires selon la revendication 1, **caractérisées en ce qu'**à l'intérieur de la deuxième partie de carter (2), sont disposés de plus des dispositifs électroniques de mesure comme par exemple un instrument de mesure électronique de la direction, un clinomètre, un altimètre, un thermomètre, une puce de prise de vue, un récepteur GPS, une interface avec ou sans fils pour l'échange de données entre les jumelles et les équipements additionnels.

5. Jumelles binoculaires selon la revendication 3, **caractérisées en ce qu'**un bouton (45) pouvant être actionné de l'extérieur est disposé sur la deuxième partie de carter (2) pour sélectionner, déclencher ou afficher diverses fonctions de mesure.

6. Jumelles binoculaires selon la revendication 1, **caractérisées en ce qu'**un ensemble de lentilles coulissant de manière axiale est affecté à l'oculaire (16) sur la première partie de carter (1) pour la mise au point individuelle sur l'affichage des valeurs de mesure (6), et un ensemble de lentilles coulissant de manière axiale est affecté à l'oculaire (17) sur la deuxième partie de carter (2) pour la compensation individuelle des dioptries.

7. Jumelles binoculaires selon la revendication 1, **caractérisées en ce qu'**une molette (32) reposant sur l'axe d'articulation (29) est prévue pour le réglage central d'un ensemble de focalisation (20, 21) affecté aux objectifs (18, 19).

8. Jumelles binoculaires selon la revendication 7, **caractérisées en ce que** l'ensemble de focalisation (20, 21) repose de manière coulissante à l'intérieur d'un tube d'objectif (25, 26) pouvant être vissé sur les deux parties de carter (1, 2).

9. Jumelles binoculaires selon la revendication 7, **caractérisées en ce qu'**une languette (27, 28) est fixée sur chacun des ensembles de focalisation (20, 21) parallèlement à l'axe optique (7) de l'objectif (18, 19), qui peut être mise en contact avec une languette en tôle (36, 37) à l'intérieur de la première et de la deuxième partie de carter (1, 2) qui est reliée aux moyens de réglage (34, 35) entraînés par la molette (32) pour la focalisation.
